Europäisches Patentamt

European Patent Office

Office européen des brevets

(11) Veröffentlichungsnummer: **0 178 295**
A1

# (12) EUROPÄISCHE PATENTANMELDUNG

(21) Anmeldenummer: 85890250.5

(22) Anmeldetag: 08.10.85

(51) Int. Cl.⁴: **F 16 D 65/09**, F 16 D 51/22

(30) Priorität: **12.10.84 AT 3251/84**

(43) Veröffentlichungstag der Anmeldung: **16.04.86**
**Patentblatt 86/16**

(84) Benannte Vertragsstaaten: **BE DE FR IT**

(71) Anmelder: **Josef Rinner KG Achsenfabrik, Werksweg 3, A-4864 Attersee (AT)**

(72) Erfinder: **Der Erfinder hat auf seine Nennung verzichtet**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

(54) Trommelbremse.

(57) Eine Trommelbremse besteht aus einer drehbar gelagerten Bremstrommel (2) und aus zwei auf einem Schwenkzapfen (5) drehbar gelagerten Bremsbacken (4), die mittels einer zwischen die Bremsbacken (4) greifenden Spannvorrichtung gegen die Kraft wenigstens einer Rückzugfeder (7) um den Schwenkzapfen (5) auseinanderdrückbar sind.

Um eine Selbsteinstellung der Bremsbackenlagerung sicherzustellen, ist der Schwenkzapfen (5) in einem radial zur Bremstrommel (2) verlaufenden Langloch (10) frei verschiebbar gelagert.

## Trommelbremse

Die Erfindung bezieht sich auf eine Trommelbremse, bestehend aus einer drehbar gelagerten Bremstrommel und aus zwei innerhalb der Bremstrommel auf einem Schwenkzapfen eines drehfesten Bremsträgers drehbar gelagerten Bremsbacken, die mittels einer zwischen die Bremsbacken greifenden Spannvorrichtung gegen die Kraft wenigstens einer Rückzugfeder um den Schwenkzapfen auseinanderdrückbar sind, der in einem Langloch des Bremsträgers verschiebbar ist.

Um ein gleichmäßiges Anlegen der Bremsbacken an der Bremstrommel über die gesamte Länge der Bremsbeläge, insbesondere bei noch nicht eingelaufenen Trommelbremsen, sicherzustellen, ist es bekannt (DE-B-1 041 802), den abgesetzten Schwenkzapfen für die beiden Bremsbacken in eine elastische Buchse einzusetzen und ihn über diese Buchse am Bremsträger zu lagern, so daß sich der Schwenkzapfen im Ausmaß der elastischen Verformung der Buchse gegenüber dem Bremsträger verlagern kann. Damit wird im Verformungsbereich der elastischen Buchse eine Selbsteinstellung der Bremsbackenlagerung ermöglicht, was sich in einem gleichmäßigeren Anlegen der Bremsbacken an der Bremstrommel auswirkt. Nachteilig bei dieser bekannten Konstruktion ist allerdings, daß im Bereich des Bremsträgers der Trommelbremse mit einer erhöhten Wärmebelastung gerechnet werden muß, die eine Gefahr für die gummielastische Buchse darstellt. Außerdem bleibt der mögliche Stellweg für eine Selbsteinstellung der Bremsbacken aufgrund des vergleichweise geringen Federweges der elastischen Buchse beschränkt. Der Schwenkzapfen muß ja in der Buchse gegenüber einem Kippmoment ausreichend abgestützt werden, was bei der zur Verfügung stehenden, vergleichsweise geringen Länge der Buchse den Einsatz eines weicheren Buchsenwerkstoffes ausschließt. Dazu kommt noch, daß die Verstellung des Schwenkzapfens nur gegen die Federkraft der Buchse möglich ist, was erhebliche Kräfte erfordert. Dies führt dazu, daß die Selbsteinstellung der Bremsbackenlagerung erst bei größeren Bremsmomenten wirksam werden kann, was die Bremswirkung beeinträchtigt und einen erhöhten Verschleiß bedingt.

Schließlich ist es bekannt (DE-A-2 915 772), den Schwenkzapfen für die beiden Bremsbacken einer Trommelbremse in einem gegenüber einer Trommelradialen geneigten Langloch verschiebbar zu führen, so daß je nach der Drehrichtung der Bremstrommel der Schwenkzapfen über die auflaufende Bremsbacke innerhalb des Langloches verschoben wird. Da sich die beiden Bremsbacken über zwei zueinander geneigte Gleitflächen an dem Schwenkzapfen abstützen, wird bei einer Verschiebung des Schwenkzapfens der Abstand zwischen den beiden Bremsbacken geändert. Die volle Bremswirkung tritt demnach nur in der einen Endlage des Schwenkzapfens bei der Vorwärtsfahrt, nicht aber bei der Rückwärtsfahrt auf. Diese Auflaufbremsen können folglich nicht für eine Bremsung sowohl bei der Vorwärts- als auch bei der Rückwärtsfahrt eingesetzt werden.

Der Erfindung liegt somit die Aufgabe zugrunde, eine sowohl für die Vorwärts- als auch für die Rückwärtsfahrt wirksame Trommelbremse zu schaffen, die eine lange Lebensdauer aufweist und bei der eine Selbsteinstellung der Bremsbackenlagerung bereits bei vergleichsweise geringen Bremskräften gewährleistet wird.

Ausgehend von einer Trommelbremse der eingangs geschilderten Art löst die Erfindung die gestellte Aufgabe dadurch, daß das Langloch für den frei verschiebbaren Schwenkzapfen radial zur Bremstrommel verläuft.

Da der Schwenkzapfen in einem radialen Langloch des Bremsträgers frei verschiebbar geführt ist, muß zur Verstellung des Schwenkzapfens keine Federkraft od. dgl. überwunden werden, so daß die Selbsteinstellung der Bremsbackenlagerung über eine Verstellung des Schwenkzapfens bereits beim Auftreten vergleichsweise geringer Bremskräfte wirksam wird. Die seitliche Abstützung des Schwenkzapfens an den Längsrändern des radialen Langloches verhindert dabei eine Schlagbeanspruchung. Die erfindungsgemäße Lagerung des Schwenkzapfens kommt daher ohne federnde Abstützung aus, was eine große Betriebssicherheit und eine lange Lebensdauer gewährleistet. Das unmittelbare Wirksamwerden der Selbsteinstellung der Bremsbackenlagerung beim Auftreten von entsprechenden Bremskräften erhöht außerdem die Bremskraft, so daß mit einer einfachen Konstruktion allen Anforderungen entsprochen werden kann.

In der Zeichnung ist der Erfindungsgegenstand in einem Ausführungsbeispiel schematisch dargestellt. Es zeigen
Fig. 1 eine erfindungsgemäße Trommelbremse in einem achsnormalen Schnitt und
Fig. 2 die Lagerung des Schwenkzapfens für die Bremsbacken im Schnitt nach der Linie II-II der Fig. 1 in einem größeren Maßstab.

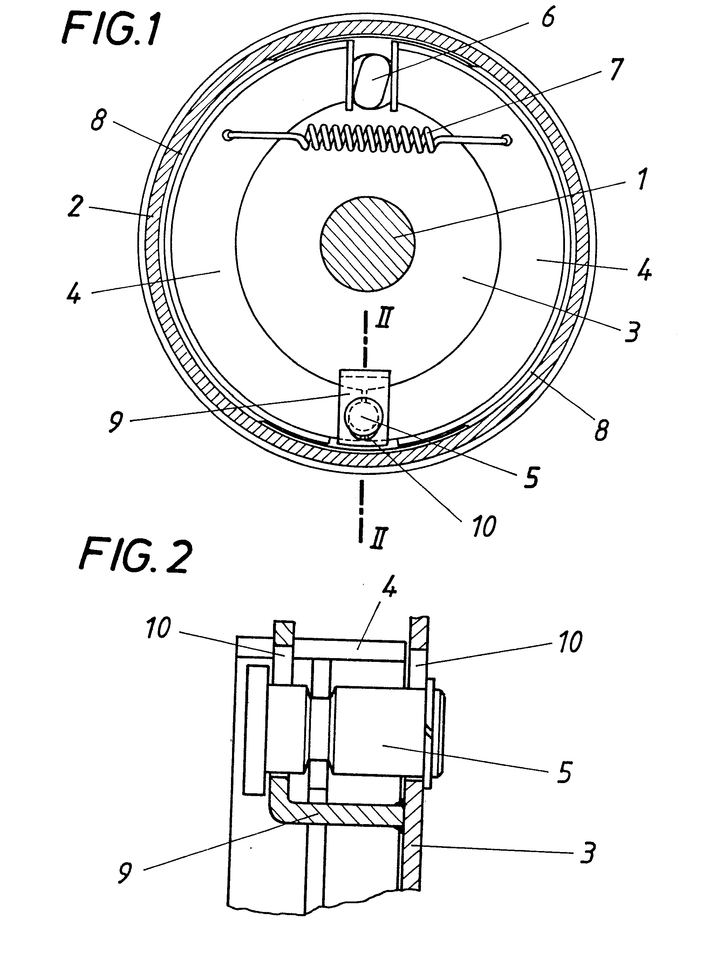

Die dargestellte Trommelbremse besteht im wesentlichen aus einer auf einer Achse 1 drehbar gelagerten Bremstrommel 2 und einem als Bremsschild ausgebildeten Bremsträger 3, der mit der Achse 1 drehfest verbunden ist. Innerhalb der Bremstrommel 2 sind auf dem Bremsträger 3 zwei Bremsbacken 4 gelagert, die sich an einem gemeinsamen Schwenkzapfen 5 drehbar abstützen. Zur Betätigung der Trommelbremse ist eine Spannvorrichtung vorgesehen, die aus einem zwischen die freien Enden der Bremsbacken 4 ragenden, über eine Bremswelle verdrehbaren Bremsnocken 6 besteht. Die Anlage der Bremsbacken 4 am Bremsnocken 6 wird durch eine die beiden Bremsbacken verbindende Rückzugfeder 7 sichergestellt. Wird der Bremsnocken 6 zur Betätigung der Trommelbremse verdreht, so werden die beiden Bremsbacken 4 mittels des Bremsnockens 6 um den Schwenkzapfen 5 als Drehachse auseinandergedrückt und legen sich mit ihren Bremsbelägen 8 bremsend an die Bremstrommel 2 an. Damit nun eine über die Länge der Bremsbeläge gleichmäßige Anlage der Bremsbacken 4 an der Bremstrommel 2 erreicht wird, ist der Schwenkzapfen 5 gegenüber dem Bremsträger 3 radial frei verschiebbar gelagert, so daß sich aufgrund der jeweils herrschenden Kräfte der Schwenkzapfen 5 im Sinne einer Selbsteinstellung der Bremsbacken 4 verlagern kann. Zu diesem Zweck bildet der Bremsträger 3 zusammen mit einem am Bremsträger 3 befestigten, die Bremsbacken 4 umgreifenden, abgewinkelten Bügel 9 eine Lagergabel, deren Gabelschenkel mit einem radialen Langloch 10 zur Aufnahme des Schwenkzapfens 5 versehen sind, wie dies in Fig. 2 dargestellt ist. Die Führung des Schwenkzapfens 5 in den Langlöchern 10 bietet dabei eine seitliche Abstützung des Schwenkzapfens 5, so daß die Umfangskräfte von den Bremsbacken 4 über den Schwenkzapfen 5 unabhängig von der jeweiligen Zapfenstellung stoßfrei auf den Bremsträger 4 übertragen werden können. Diese stoßfreie Übertragung der auftretenden Umfangskräfte ist eine notwendige Voraussetzung, um ein Ausschlagen der Zapfenlagerung zu vermeiden und eine große Lebensdauer sicherzustellen. Bei den herkömmlichen Trommelbremsen mit verstellbaren Lagerzapfen ist zu diesem Zweck stets eine federnde Abstützung über eine elastische Buchse od. dgl. erforderlich, wobei auch die Umfangskräfte zu einer nicht immer vorteilhaften Verlagerung des Schwenkzapfens führen können.

Patentanspruch :

Trommelbremse, bestehend aus einer drehbar gelagerten Bremstrommel (2) und aus zwei innerhalb der Bremstrommel (2) auf
einem Schwenkzapfen (5) eines drehfesten Bremsträgers (3)
drehbar gelagerten Bremsbacken (4), die mittels einer
zwischen die Bremsbacken (4) greifenden Spannvorrichtung
gegen die Kraft wenigstens einer Rückzugfeder (7) um den
Schwenkzapfen (5) auseinanderdrückbar sind, der in einem
Langloch (10) des Bremsträgers (3) verschiebbar ist, dadurch gekennzeichnet, daß das Langloch (10) für den frei
verschiebbaren Schwenkzapfen (5) radial zur Bremstrommel (2)
verläuft.

**FIG.1**

**FIG.2**

0178295

Europäisches
Patentamt

**EUROPÄISCHER RECHERCHENBERICHT**

Nummer der Anmeldung

EP 85 89 0250

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | FR-A- 563 764 (GROSJEAN)<br>* Seite 1, Zeile 28 - Seite 2, Zeile 19 * | 1 | F 16 D 65/09<br>F 16 D 51/22 |
| A | FR-A- 775 214 (DE LAVAUD) | | |
| A | US-A-1 851 737 (STONER) | | |
| A,D | EP-A-0 017 762 (BERGISCHE ACHSENFABRIK) | | |
| A | GB-A- 286 209 (LASNE) | | |
| A,D | DE-B-1 041 820 (VOIGT) | | |

RECHERCHIERTE SACHGEBIETE (Int Cl 4)

F 16 D   65/08
F 16 D   65/09
F 16 D   65/22
F 16 D   51/20
F 16 D   51/22
F 16 D   51/50
B 60 T    7/20

Der vorliegende Recherchenbericht wurde für alle Patentansprüche erstellt.

| Recherchenort | Abschlußdatum der Recherche | Prüfer |
|---|---|---|
| DEN HAAG | 14-01-1986 | HARTEVELD C.D.H. |